# EUROPEAN PATENT APPLICATION

(11) **EP 0 717 338 A1**
(43) Date of publication of application: **19.06.1996**
(21) Application number: 95308718.6
(22) Date of filing: 01.12.1995
(51) Int. Cl.: G06F 1/00

(54) **Method of protecting copyright**

(30) Priority: 16.12.1994 US 357887
(71) Applicant: AT&T Corp., New York, NY 10013-2412 (US)
(72) Inventor: Fraser, Alexander Gibson, Bernardsville, New Jersey 07924 (US)
(74) Representative: Watts, Christopher Malcolm Kelway, Dr.

(57) **Abstract**

A method of protecting proprietary rights in protectable works of authorship, by restricting each copy of the work to a specific device or set of devices. A combination of encryption and bureaucratic mechanisms make it impracticable for anyone to play the work unless authorized to do so.

## Description

### Technical Field

The present invention relates to a method for protecting proprietary rights to works of authorship which are recorded in digital form, such works including, for example, music and video presentations.

### Background of the Invention

It is inevitable that in the near future, works of authorship, such as music, will be available for review and purchase from the comfort of one's home. With technology like the AT&T audio coding technique which delivers CD quality sound from a 128Kb/sec bit stream; ISDN networks that convey data at 128 Kb/sec; magnetic disk storage which costs today less than $1.00 per megabyte, and the cost of magnetic tape storage, which can be as little as $1.38 per hour depending upon the sophistication of the tape drive, the technological and economic foundation exists for delivery of music and other protectable works of authorship over a public network.

In practical terms one can expect that music purchases will be made using a computer. This machine may be a personal computer or it may be buried inside an appliance such as a juke box or hi-fi audio component.

Dorward and Thomson at AT&T Bell Laboratories have previously demonstrated a "juke box", consisting of a personal computer that obtains CD quality music from a networked file store. The music is stored in compressed digital form using the PAC (Perceptual Audio Coding) algorithm, developed by Johnston and Quackenbush. An index, arranged alphabetically by title or performer, appears on the computer screen and one merely "clicks" a title to hear the music played through a stereo high-fidelity audio system.

The average rate of data transfer from the file store in this system is less than 128Kb/sec. It could have been transmitted in real-time over a pair of ISDN channels, transferred off-line to disk at one of the lower data rates already available with a modem on a telephone line, or it could have been delivered in much less than real time over the Internet to anyone with T1 access to that network. Plans by telephone and cable television companies promise high speed transmission to many homes within a few years. "Music by wire" seems inevitable.

A musical composition "Head First", recorded by Aerosmith, was recently placed in the Compuserve file store, and made available without additional charge to all of Compuserve's customers. The song, which plays for 3 minutes and 14 seconds, took about 90 minutes to download over a 9.6Kb/sec access circuit. Nonetheless, this event gave emphasis to a concern by music publishers that the existing copyright law is insufficient to preserve their rights to royalty payments.

While it appears that technology may exist for transmission of protectable works of authorship on a switched public network, it may not become an interesting business opportunity until there is a practical means of protecting the proprietary rights for this material, including copyright.

This invention is directed to a solution of that problem.

### Summary of the Invention

Accordingly, the general object of this invention is to provide a method of protecting the proprietary rights in protectable works of authorship such as music or video. More specifically, it is one object of this invention to restrict each copy of a protectable work of authorship to a specific player or set of players, where "player" is defined as any device capable of providing the protected work to the consumer. This ensures that the publisher of the work receives its royalties for each copy of the work being played. In other words, the work cannot be enjoyed by someone who did not license that right from the publisher.

It is a further object of the invention that the distributed work, such as music, is not tied to a particular player, but that any particular consumer can obtain a license to play the work for his specific player only.

This is accomplished by requiring the purchaser of the protectable work of authorship to provide an identification number for the player or players on which the work is to be played. In return, the consumer receives a permit which is a small packet of data which when prepended to the work unlocks the work so that it can be played on this specific player, or players.

Another object of this invention is to employ a combination of encryption and administrative mechanisms that would make it extremely difficult to play the work on an unauthorized player. The implementation is intended to be robust enough to discourage an entrepreneur who would sell a device which circumvents this protection. In other words, the inventive implementation is designed to discourage someone who would reproduce and sell the digitized work to others in a way that does not require them to purchase a license from the copyright holder.

### Brief Description of the Drawings

In the drawings:
FIGS. 1A-1C illustrate a transmission format for protecting a work, such as music, from unauthorized copying; and
FIGS. 2A-2C show a block diagram for an encryption scheme and decryption scheme in accordance with the invention.

### Detailed Description of the Invention

The following terms will be used to describe how protection is achieved in accordance with the principles of the invention.
- Player: The device which decrypts and decodes the protectable work of authorship;
- Vendor: The entity which sells the protectable work of authorship to the consumer;
- Publisher: The entity which encodes and encrypts the protectable work of authorship;
- Manufacturer: The entity which makes the Player;
- Referee: The entity which issues permits; and
- Governor: The entity which issues identification numbers to Manufacturers.

The role of the Governor is minimal, and it might reasonably be performed by a standards body such as the EIA. A Player identification number could be, for example, a 10-digit number. Although a separate identification number for each Player is preferred, it is not necessary so long as no two Manufacturers use the same identification number. A preferred embodiment of this invention would have the Governor choose the six (6) most significant digits which would identify the specific Manufacturer of each Player, while leaving the specific use for the remaining digits to the Manufacturer.

In accordance with the invention, the Referee computes a permit which consists of the work title and Player identification number unencrypted, and the work key encrypted using the Player key, as will be described in greater detail below. Also, random digits could be appended to the work key to make decryption more difficult when someone has managed to collect copies of many permits for the same work.

The permit authorizes a given Player to play a given work of authorship. Several permits may be concatenated when a customer has several Players that are authorized to play the music.

The work and permit are encrypted with a robust encryption algorithm such as the Data Encryption Standard (DES). The work and permit are encrypted separately. Thus access to the work requires two keys.

Each Publisher chooses a different key for each protectable work of authorship. The work is encrypted with the corresponding work key. Each Publisher then creates a work code book in which all the work keys are indexed by work title. The work code book is kept secret, and access is restricted to the Publisher and Referee.

Similarly, each Manufacturer chooses a different Player key for each Player. The Player key is a code used to decrypt and decode the permit. Each Manufacturer then creates a Player code book in which all the Player keys are indexed by Player identification number, which identifies each authorized player. Like the work code book, the Player code book is kept secret and access is restricted to the Manufacturer and Referee.

It is essential that it be very difficult to discover the Player key. With the Player key in hand, one can decrypt the permits which the Player's owner has obtained and thereby come to know the work key. Once the work has been decrypted, copies of the work can be played by any device that knows how to decode it. While it may help to keep the work encoding scheme secret, it is unlikely that can be done if it is not possible to keep the Player key secret. Therefore it is the Player key, not the decoder algorithm which should be most rigorously protected.

In order to protect the Player key it is placed, for example, in a write-once memory inside the decoder chip, the write circuits should then be disabled, and the chip should then be encased in a tamper-proof package. It is not uncommon in commercial practice for someone with serious interest in the content of a chip to remove the chip's packaging, expose the micro-circuit and inspect the device with a microscope. The chip, once exposed in this way, can be exercised and so reveal even more about its workings. Fortunately, various counter measures have been developed in response to military and national security requirements. Known protection schemes should be used to protect the Player.

Once decrypted, the work is exposed for anyone who cares to abuse its author's proprietary rights. Therefore, it is preferable that the circuits which decode it and convert it to analog form be co-located and packaged in a way that makes it difficult to pick off the decrypted bit stream. That is achieved by including decryption, decoding and digital-to-analog conversion in one package. While it would be possible to copy the analog signal, as is done now, the result will lack the quality of the digital original. Hopefully, this will discourage potential abuse of the inventive system.

Since it is also essential that the contents of both code books remain secret, the Referees must be trustworthy. Accordingly, it is suggested that only a minimum number of Referees be appointed.

In one preferred embodiment, a consumer interested in using his personal computer to purchase music would use a software package, specially designed for this purpose, to make contact with the music Vendor and provide the necessary means to browse the Vendor's catalog. The software may also be designed to allow the consumer to preview the music and to obtain background information on the recording.

Once a decision to purchase is made, the personal computer will transmit a list of the identities of Players owned by the consumer, and a credit card number or some other reference for payment. The Vendor would then call upon a Referee to obtain a permit, similar to how a Vendor today would call to check a credit card payment. The Vendor would supply the Referee with the title of the music and the identification number of the Player or Players. Using the code books, the Referee computes and returns an appropriate permit.

The Vendor will then transmit the encrypted music with the issued permit to the consumer.

The consumer's software package will search for a permit bearing the identification number of its Player. It will then decrypt the permit using its Player key. Once decrypted the work key is accessible and is used to decrypt the transmitted work.

In a second embodiment of this invention, the Vendor bulk mails a compact disc, or some other similar storage device, with encrypted music and unencrypted previews. Having listened to the previews, a customer might choose to purchase a piece using much the same procedure as described above. In the final step, the permit is transmitted from the music Vendor and placed in a file on the customer's machine, indexed by the piece of music to which it applies. The software which retrieves the music from the compact disc would first look for a suitable permit in the file system, sending that to the Player before playing the music.

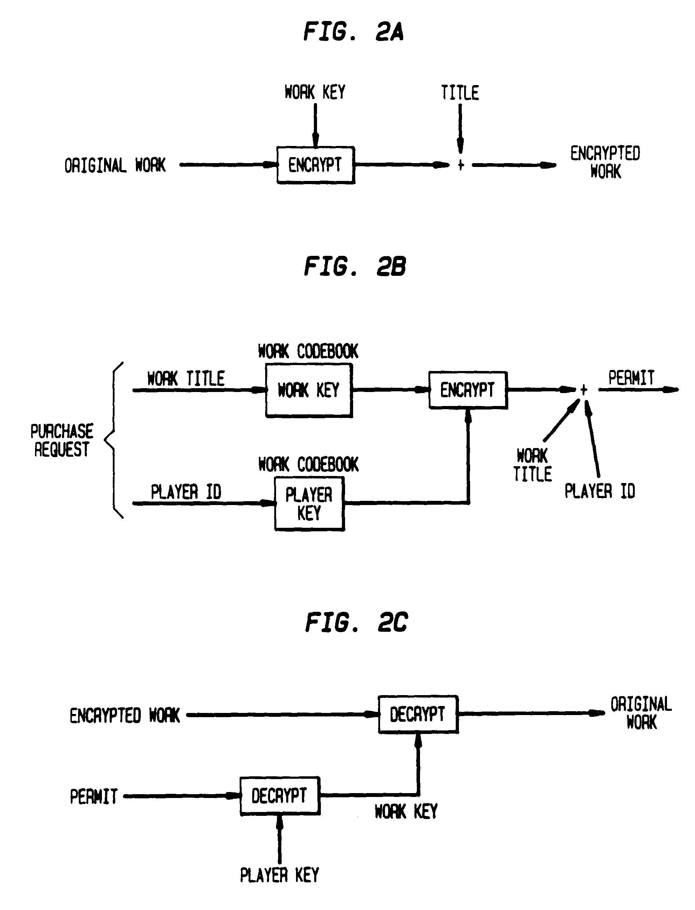

Referring now to FIGS. 1A and 2A, it is seen that the original work is encrypted with the work key, and the work title is then attached for identification purposes. The result, as shown in FIG. 2A, is the encrypted work, consisting of the work title, and the original work encrypted with the work key.

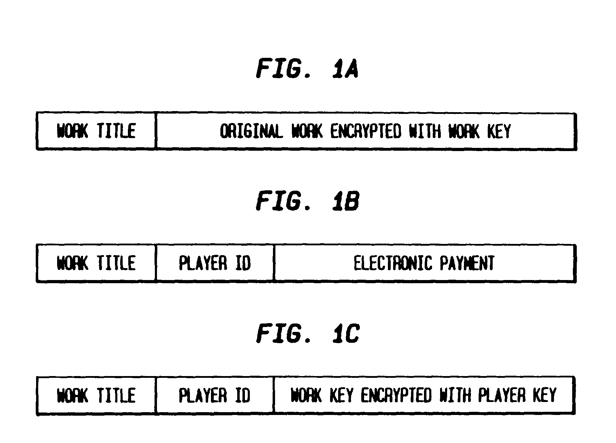

FIGS. 1B and 1C, along with FIG. 2B illustrate how the permit is generated for the consumer. More particularly, the purchase request is received from the consumer consisting of the work title and the Player I.D. This is transmitted to the Vendor, along with identification of the electronic payment means as shown in FIG. 1B. Generation of the permit consists of the following four steps:
a) Search the Work Codebook for an entry bearing the work title as provided by the consumer and obtain the work key from that codebook entry;
b) Search the Player Codebook for an entry bearing the player ID as provided by the consumer and obtain the player key from that codebook entry;
c) Use the player key to encrypt the work key;
d) Attach the work title and player ID to the encrypted work key, thereby creating the permit which is sent to the consumer.

After the permit is issued, the original work is decoded in the manner shown in FIG. 2C. More particularly, the permit is applied to a decryption unit, where decryption takes place in combination with the player key. The output of the decryption unit is the work key, which is applied to a decryption unit to decrypt the encrypted work with the result being the original work, then available for the consumer to view or listen to the original music, as provided by the Vendor.

The foregoing merely illustrates the principles of the invention. It will thus be appreciated that those skilled in the art will be able to devise various arrangements which, although not explicitly described or shown herein, embody the principles of the invention and are thus within its scope.

## Claims

1. A method of protecting proprietary rights to selected works of authorship, the method comprising the steps of:
assigning a coded work key to a work of authorship;
providing a Player to play said work of authorship, said Player provided with an individually assigned Player identification number and a coded Player key;
issuing a coded permit to a user for access to said work of authorship, said coded permit including a title for said work of authorship, said coded work key and said Player identification number;
utilizing said Player key to decode said coded permit whereby said coded work key is decoded by said Player; and
utilizing said decoded work key to access said work of authorship.

2. A method in accordance with Claim 1, wherein the work of authorship is transmitted from Vendor to consumer over a public network.

3. A method in accordance with Claim 1, wherein the Player consists of a group of Players.

4. A method in accordance with Claim 1, wherein the work of authorship is stored on a public network in compressed digital form.

5. A method in accordance with Claim 4, wherein the Perceptual Audio Coding ("PAC") algorithm is used.

6. A method in accordance with Claim 1, wherein the work of authorship and permit are individually encrypted using a predetermined encryption algorithm.

7. A method in accordance with Claim 6, wherein the work of authorship and permit are individually encrypted using the Data Encryption Standard.

8. A method of protecting proprietary rights to selected works of authorship, the method comprising the steps of:
encrypting a selected work of authorship with a coded work key;
generating a permit to access said encrypted selected work of authorship;
transmitting said permit to a user desirous of accessing said selected work of authorship; and
utilizing said permit to decrypt said selected work of authorship to permit access by said user.

9. A method in accordance with Claim 8, wherein said generating step further includes the steps of:
combining a work title with a work key to generate a first signal, and combining a player I.D. with a player key to generate a second signal; and
encrypting said first and second signals to generate said permit.

10. A method in accordance with Claim 8, wherein said selected works of authorship are stored on a CD Rom medium.

11. A method of protecting proprietary rights to selected works of authorship, the method comprising the steps of:
assigning a work key to a work of authorship;
utilizing said work key to encrypt said work of authorship;
installing a concealed player key in a player that gives access to said work of authorship;
issuing a permit to a user so that said user can have access to said work of authorship, said permit containing said work key encrypted with said player key;
utilizing said player key in a player to decrypt said encrypted work key that is contained in said permit, thereby revealing said work key; and
utilizing said work key to decrypt said encrypted work of authorship whereby said work of authorship is revealed.
